# EUROPEAN PATENT SPECIFICATION

(11) **EP 1 264 319 B1**
(45) Date of publication and mention of the grant of the patent: **17.08.2005**
(21) Application number: 01957611.5
(22) Date of filing: 14.03.2001
(51) Int. Cl.: H01G 2/10

(54) **CAPACITOR AND MANUFACTURING METHOD OF CAPACITOR**
KONDENSATOR UND DESSEN HERSTELLUNGSVERFAHREN
CONDENSATEUR ET SON PROCEDE DE FABRICATION

(30) Priority: 15.03.2000 BR 8001310
(43) Date of publication of application: 11.12.2002
(73) Proprietor: EPCOS Do Brasil Ltda, 94000-970 Gravatai RS (BR)
(72) Inventor: SCHABBACH, Gilvan, 90650-070 Porto Alegre RS (BR)
(74) Representative: Epping Hermann & Fischer
(86) International application number: PCT/IB2001/000374
(87) International publication number: WO 2001/069615

(56) References cited:
- US-A- 5 403 454

## Description

Subject of the invention is a capacitor, specially a dry capacitor, which can be made from metallized plastic film or plastic film and metallic foils as armatures, with one external protection of a shrinkable tube.

Capacitors are electronic components, used in electro-electronic devices. The capacitor is formed by two armatures and one dielectric, in a wound form or stacked form, forming the capacitive element. The capacitive element is connected to the other elements of a electrical circuit by terminals. With an electrical current applied to these terminals, the capacitor is loaded with one electrical load.

There are a lot of different types of capacitors: film capacitors (polyester or polypropylene), ceramic, electrolytic, tantalum, etc. This invention is applicable to any of them, if it is a dry capacitor (without a presence of a liquid substance in its composition), and needs a cover as a mechanical and/or electrical protection.

The capacitors normally need an external cover to be handled without mechanical damages during the assembling in the circuit. This cover has the function to protect the capacitor and the neighbor components from short circuits, which could damage the whole circuit, assuring the mechanical robustness to the capacitors during the handling and assuring the attachment of the terminals during soldering process..
There are known capacitors in a naked version (without a protection cover), boxed in plastic cans and covered by epoxy powder resin.

Most of the plastic capacitors are covered by one of the processes mentioned. The naked version has application in some restricted fields, because it is sensitive to mechanical agents and soldering process.

The covering techniques provide to the capacitors the necessary protection against external mechanical agents, as well as against the contact with the neighbor components, avoiding short circuits.

From US 5,403,454 A a heat shrinkable tube is known used as an exterior cover or sheathing of an electrical component like a tantalum capacitor. The component shown has electrical terminals extending from the inferior surface of a component body.

### Invention objectives and short description:

The object of the invention is to provide to the capacitor a protection system against the mechanical and electrical external agents, in a simple form, cheap, avoiding the use of the plastic can as known, using one shrinkable tube directly on the capacitive element.

The objective is reached by a capacitor according to claim one. Embodiments of the invention as well as a method for manufacturing the capacitor are shown in further claims.

The objective is reached by a capacitor comprising
- a capacitive element including a body,
- contact terminals at the side surfaces of the body extending beyond the inferior surface of the body,
- a flexible thermo shrinkable plastic cover surrounding the side surfaces of the body and being applied directly on the capacitive element and shrunk, such that the terminals are pressed on to the body guaranteeing contact between the terminals and the capacitive element.

The thermo shrinkable plastic cover is a plastic tube, applied and shrunk directly on the capacitor.

In an embodiment the capacitor is characterized by a partial covering of the capacitive element with thermo shrinkable plastic cover.

It is also foreseen a capacitor manufacturing method using a thermo shrinkable material which is applied directly on the capacitive element without using the well-known plastic can technique, making the production cheaper.

The objective is reached by a method for manufacturing a capacitor, particularly a method for manufacturing a dry capacitor, said capacitor comprising a capacitive element having a body and contact terminals applied to side surfaces of the body,
the method comprising a first step where a thermo shrinkable tube is applied directly on the body of the capacitive element and a next step where the thermo shrinkable tube is heated and shrunk on to the side surface of the body thereby pressing the terminals on to the body guaranteeing contact between the terminals and the capacitive element.

It's a method where in a first step a thermo shrinkable tube is directly applied on the capacitive element and in a next step the thermo shrinkable tube is heated and consequently shrinked.

### Short description of the drawings :

Following the present invention is being described with details and based on an execution example represented in the drawings.

The figures show:
Figure 1 - a view of two capacitive elements still without the protection cover, a version with preformed terminals and other with straight terminals;
Figure 2 - a view of the capacitive element covered with thermo plastic shrinkable material
Figure 3 - a view of the capacitive element without the thermo plastic shrinkable material cover
Figure 4 - a view of the capacitive element with the thermo shrinkable tube prepared to insert the capacitive element;
Figure 5 - a view of the capacitive element covered with the thermo shrinkable tube; and
Figure 6 - a view of the finished capacitor after shrinking the thermo shrinkable tube.

### Detailed description of the figures:

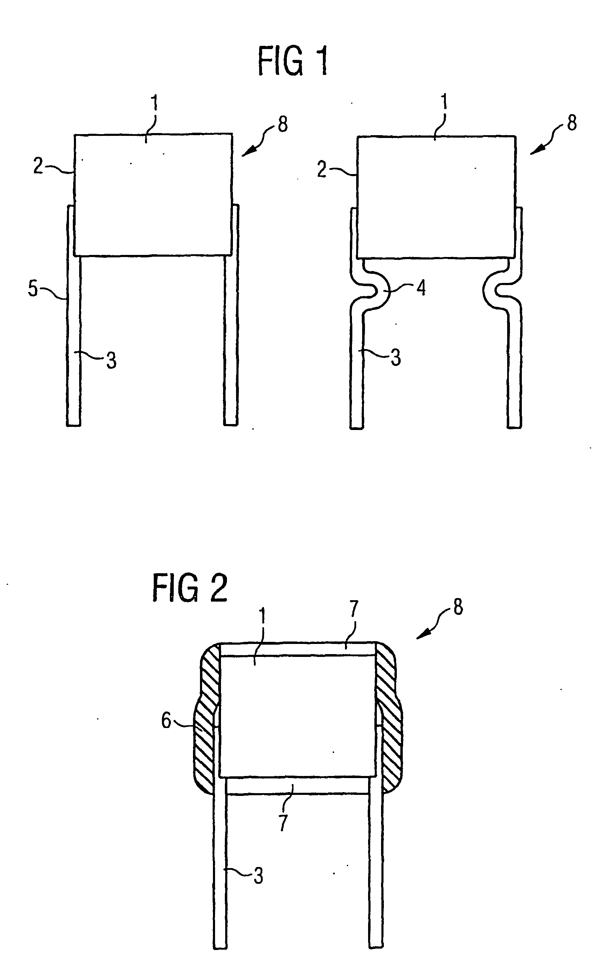

Figure 1 illustrates the capacitive element (or wound) 1 without the protection cover 6, formed by a plastic dielectric and metallic armatures 2 or metallic zone 2, which can consist of a metal deposited by melted metal spray or simply the own component metallic armatures 2. The terminals 3 are connected to the capacitive element 1 and can be preformed 4 or straight 5.

In figure 2 the capacitive element 1 has already the thermo shrinkable plastic cover 6 serving as the capacitor mechanical protection and electrical insulation. The mechanical protection results from the pressure of the mentioned thermo shrinkable plastic cover 6 on the terminals 3 and on the zone 2 of the capacitor 8, which guarantees the welding integrity and by consequence the contact between terminals 3 and the mentioned capacitor 8 and avoids the use of plastic cans.

The electrical insulation of armatures 2 of capacitor 8 is done by the cover insulating material characteristic used on the capacitive element 1. In case of a capacitor 8 with mechanically preformed terminals , the preforming serves to support the component on the PCB board (not shown) where the mentioned component is set up, and as limitation of thermo shrinkable plastic 6.

The invention can be carried out with any thermo shrinkable material 6, since this material attends to the electrical and thermal isolation request as well as provides to the capacitor 8 an adequate mechanical resistance.

The areas 7 on the superior and inferior parts of capacitor 8 are open and ambient exposed or can be sealed with resins like epoxy, polyurethan or others.

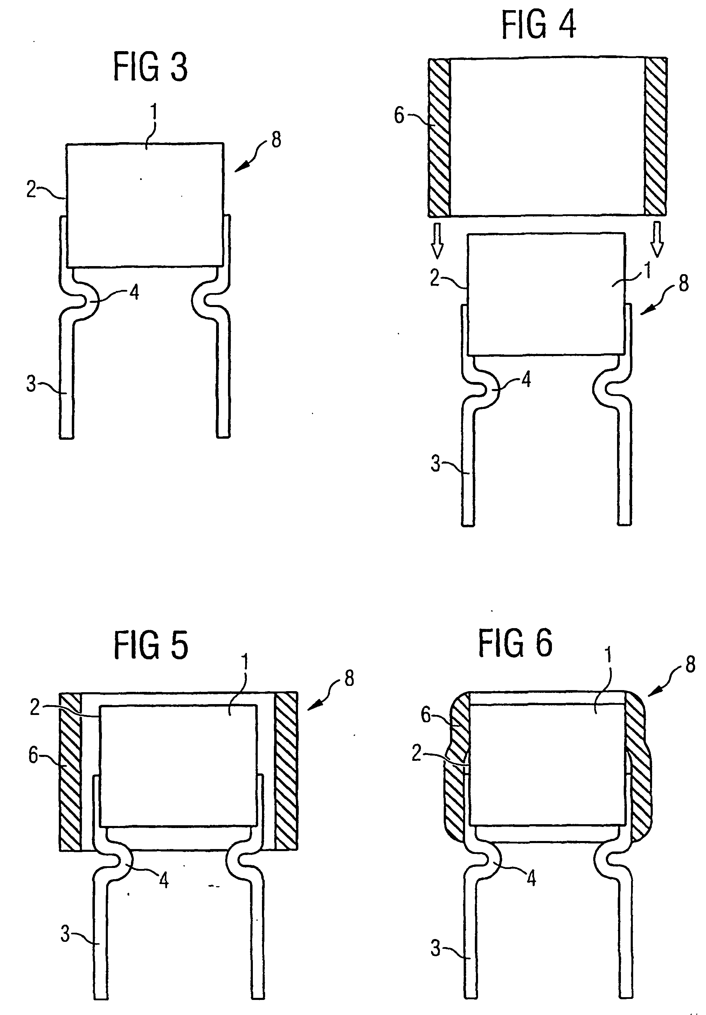

The manufacturing method of a capacitor 8, as shown on figures 3 and 6, consists to cover the capacitive element 1 with thermo shrinkable material, which usually is supplied in tubes and has to been cut in adequate sizes so that the extremities cover enough the capacitive element 1 and board to provide the capacitor 8 with the adequate mechanical protection after shrinking.

In a next step the capacitor 8 goes through a heater (not shown) which makes the referred thermo shrinkable material 6 shrink, sticking it perfectly to the capacitive element 1 as shown on figure 6.

It has been described an example of preferred realization but the present invention includes the possibility of other variations being limited only by the attached claims.

## Claims

1. Capacitor (8), particularly a dry capacitor, said capacitor (8) comprising
- a capacitive element (1) including a body,
- contact terminals (3) at the side surfaces of the body extending beyond the inferior surface of the body,
- a flexible thermo shrinkable plastic cover, or tube, (6) surrounding the side surfaces of the body and being applied directly on the capacitive element (1) and shrunk such that the terminals are pressed on to the body guaranteeing contact between the terminals and the capacitive element.

2. Capacitor according to claim 1, **characterized by** a partial covering of the capacitive element (1) with thermo shrinkable plastic cover (6).

3. Method for manufacturing a capacitor (8), particularly for manufacturing a dry capacitor, said capacitor (8) comprising a capacitive element (1) having a body and contact terminals (3) applied to side surfaces of the body and extending beyond the inferior surface of the body, the method comprising a first step where a thermo shrinkable tube is applied directly on the body of the capacitive element and a next step where the thermo shrinkable tube is heated and shrunk on to the side surface of the body thereby forming a plastic cover (6) pressing the terminals on to the body guaranteeing contact between the terminals (3) and the capacitive element (1).

4. Method according to claim 3, **characterized by** putting the capacitor (8) into a heater and heating of the thermo shrinkable material of the thermo shrinkable tube (6).

## Patentansprüche

1. Kondensator (8), insbesondere ein Trockenkondensator, wobei der Kondensator (8) umfasst:
- ein kapazitives Element (1) einschließlich eines Körpers,
- Kontaktsnschlüsse (3) an den Seitenflächen des Körpers, die aus der unteren Oberfläche des Körpers herausragen,
- eine flexible thermoschrumpfbare Plastikbedeckung oder Schlauch (6), der die Seitenflächen des Körpers umgibt und direkt auf das kapazitive Element (1) aufgebracht und geschrumpft wird, derart, dass die Anschlüsse an den Körper angepresst werden und den Kontakt zwischen den Anschlüsse und dem kapazitiven Element gewährleisten.

2. Kondensator nach Anspruch 1, **gekennzeichnet durch** eine teilweise Bedeckung des kapazitiven Elements (1) mit thermoschrumpfbarer Plastikbedeckung.

3. Verfahren zur Herstellung eines Kondensators (8), insbesondere zur Herstellung eines Trockenkondensators, wobei der Kondensator (8) ein kapazitives Element (1) mit einem Körper und auf die Seitenflächen des Körpers aufgebrachte und über die untere Oberfläche des Körpers hinausragende Kontaktanschlüsse (3) umfasst, wobei das Verfahren einen ersten Schritt, in dem ein Thermoschrumpfschlauch direkt auf den Körper des kapazitiven Elements aufgebracht wird, und einen nächsten Schritt umfasst, in dem der Thermoschrumpfschlauch erhitzt und an die Seitenfläche des Körpers angeschrumpft wird, und so eine Plastikbedeckung (6) bildet, die die Anschlüsse an den Körper anpresst und den Kontakt zwischen den Anschlüssen (3) und dem kapazitiven Element (1) gewährleistet.

4. Verfahren nach Anspruch 3, **dadurch gekennzeichnet, dass** der Kondensator (8) in einen Erhitzer gebracht und das thermoschrumpfbare Material des Thermoschrumpfschlauchs (6) erhitzt wird.

## Revendications

1. Condensateur (8), en particulier condensateur à électrolyte solide, le condensateur (8) comprenant
- un élément (1) capacitif comprenant un corps,
- des bornes (3) de contact sur les surfaces latérales du corps s'étendant au-delà de la surface inférieure du corps,
- une protection ou tube (6) en matière plastique souple thermorétractable entourant les surfaces latérales du corps et appliqué directement sur l'élément (1) capacitif et rétracté, de façon à ce que les bornes soient pressées sur le corps en garantissant un contact entre les bornes et l'élément capacitif.

2. Condensateur suivant la revendication 1, **caractérisé par** une protection partielle de l'élément (1) capacitif par la protection (6) en matière plastique thermorétractable.

3. Procédé de fabrication d'un condensateur (8), en particulier de fabrication d'un condensateur à électrolyte solide, le condensateur (8) comprenant un élément (1) capacitif ayant un corps et des bornes (3) de contact appliquées aux surfaces latérales du corps et s'étendant au-delà de la surface inférieure du corps, le procédé comprenant un premier stade dans lequel on applique un tube thermorétractable directement sur le corps de l'élément capacitif et un stade suivant dans lequel on chauffe le tube thermorétractable et on le rétracte sur la surface latérale du corps, en formant ainsi une protection (6) en matière plastique repoussant les bornes sur le corps en garantissant un contact entre les bornes (3) et l'élément (1) capacitif.

4. Procédé suivant la revendication 3, **caractérisé en ce que** l'on met le condensateur (8) dans un dispositif de chauffage et on chauffe la matière thermorétractable du tube (6) thermorétractable.
